Europäisches Patentamt

**European Patent Office**

Office européen des brevets

(11) Publication number : **0 259 314**
**B1**

(12) **EUROPEAN PATENT SPECIFICATION**

(45) Date of publication of patent specification :
07.03.90

(21) Application number : 86902813.4

(22) Date of filing : 11.04.86

(86) International application number :
PCT/EP 86/00214

(87) International publication number :
WO/8606309 (06.11.86 Gazette 86/24)

(51) Int. Cl.⁵ : $B\ 23\ K\ 11/00$

(54) **AUTOMATIC WELDING PROCESS OF A PLATELIKE BODY INSIDE METAL BARS AND THE MACHINE FOR THE IMPLEMENTATION OF SAID PROCESS.**

(30) Priority : 26.04.85 IT 2051685

(43) Date of publication of application :
16.03.88 Bulletin 88/11

(45) Publication of the grant of the patent :
07.03.90 Bulletin 90/10

(84) Designated contracting states :
AT BE CH DE FR GB LI LU NL SE

(56) References cited :
DE--C-- 657 169
GB--A-- 2 011 007
GB--A-- 2 152 174
US--A-- 3 600 548

(73) Proprietor : Italtel Tecnomeccanica s.p.a.
Strada Maratta Bassa Km. 3,695
I-05100 Terni (IT)

(72) Inventor : CECCHELLERO, Sergio
Via Gozzoli, 4
I-20152 Milano (IT)
Inventor : SALVATORE, Daniele
Viale dei Fiori, 59
I-20095 Cusano Milanino (IT)

(74) Representative : Coggi, Giorgio
ITALTEL Società Italiana Telecomunicazioni s.p.a.
(Servizio Brevetti) Casella Postale 10
I-20019 Settimo Milanese (MI) (IT)

Jouve, 18, rue St-Denis, 75001 Paris, France

## Description

The present invention relates to a process for the automatic welding of a platelike body inside tubular bars having a transverse, polygonal-shaped section and to the welding machine which will perform said process.

The British patent No. 2 152 174 describes a modular structure fit for carpentry works, mainly composed of a plurality of tubular bars that are assembled through joints. These latter are so shaped as to accommodate the screw heads whose shank can be screwed into a platelike body arranged at both bar ends, perpendicular to their axis. According to a preferential embodiment said platelike body is joined to the bars with solder. The tubular bars have a transverse polygonal-shaped section and the automatic welding operations require therefore the overcoming of technical problems connected with the arrangement of the platelike body inside the bars and with the welding of more sides (preferably four) of the platelike body to the respective internal faces of the bar.

It is well known that the most suitable welding process to be performed under an automatic process is called « thermal resistance » process where the heat, through the Joule effect, is produced on the contact surface among the sections to be welded, which is placed between a pair of electrodes. When such a process is separately performed by welding a side of the platelike body to the respective internal face of the bar, no particular technical problems are evidenced. Such a process is not compatible with the velocity of the automatic production line of the structure as this would require the execution in succession of four welding operations by spending more time than is required by other bar processings such as boring, shearing, soldering etc. If the welding process is divided into four different operations, a sensible reduction in the velocity of the production line is reached.

Purpose of the present invention is the determination of a suitable process able to perform the simultaneous welding of each side of the platelike body (for example, four or more sides) to the respective internal portion of the tubular bar as well as to realize a suitable machine able to carry out such a process.

To this end the process, according to the invention, foresees the execution in succession of the phases as hereafter specified :

the bar and the platelike body are placed in respective supports ;

the platelike body is withdrawn from the support and electrically connected to a first electrode of the welding machine ;

the unit composed of the « first electrode-platelike body » is inserted within the bar, such that the position of the platelike body corresponds to the transverse centre plane of a first and a second part of a second electrode of the welding machine ;

said first and/or second part of the second electrode is moved along the centre plane so as to clamp the bar between said first and second parts and as the bar is clamped, an electric power between said first and second electrode is applied to effect electrical resistance welding of the platelike body to the tubular bar.

Further characteristics of the process according to the invention will be indicated in the description relative to the realisation of an automatic machine able to carry out the said process, better shown in the enclosed drawings, whereas :

figure 1 shows the machine as it is realised according to the invention ;

figure 2 shows the welding unit of the machine in Fig. 1, on enlarged scale ;

figure 3 shows the different phases of the process carried out according to the invention ;

figure 4 shows a longitudinal and a transverse section of a bar's portion in order to show the structure of the platelike body and of the two party of the second electrode of the welding machine.

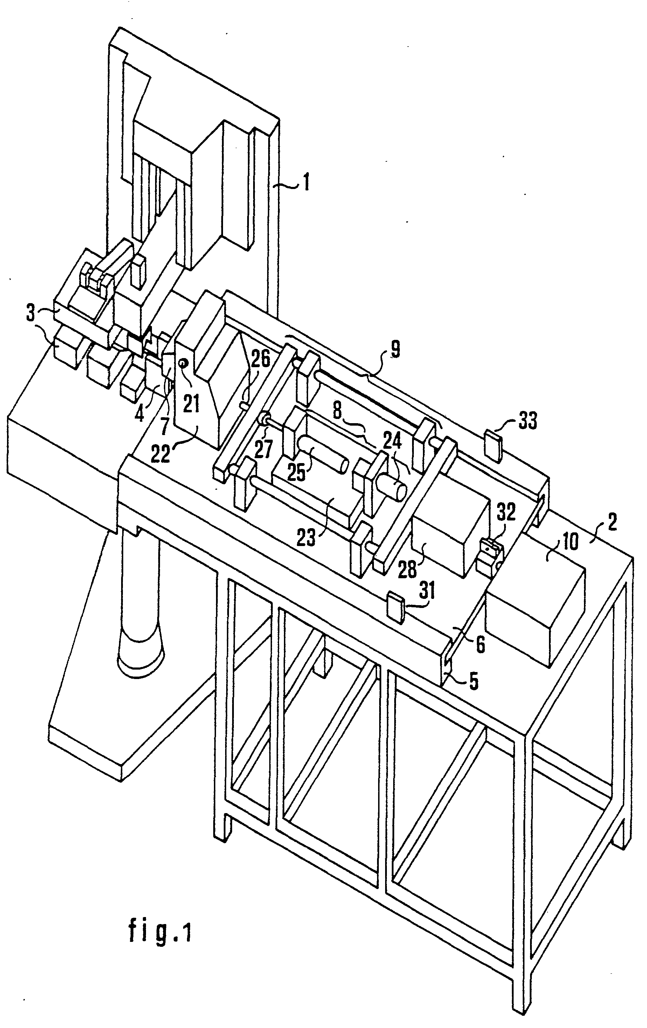

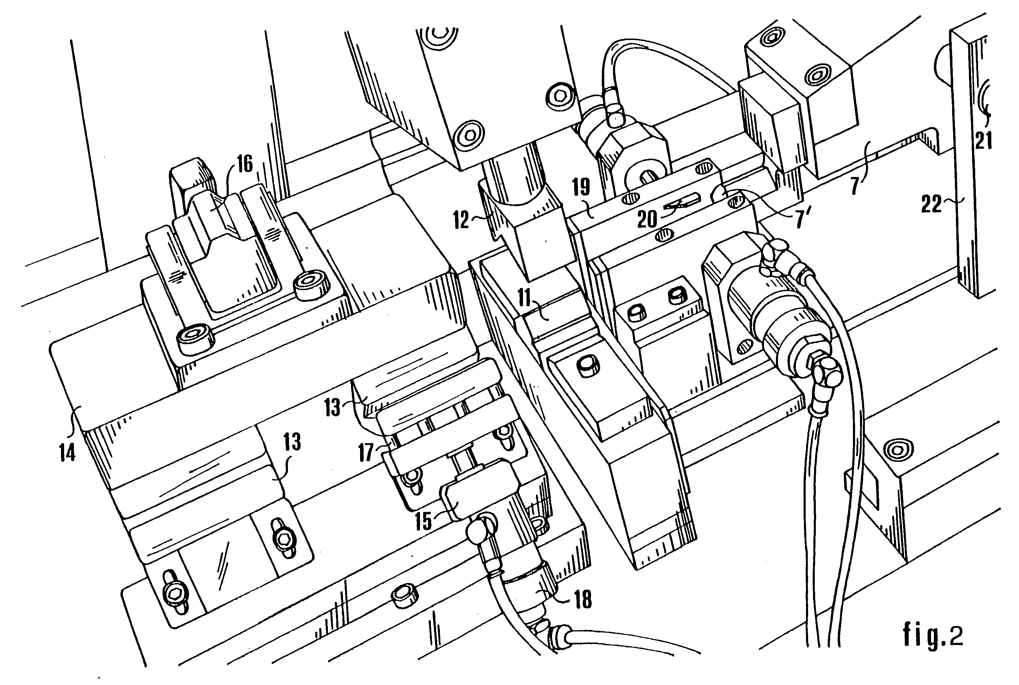

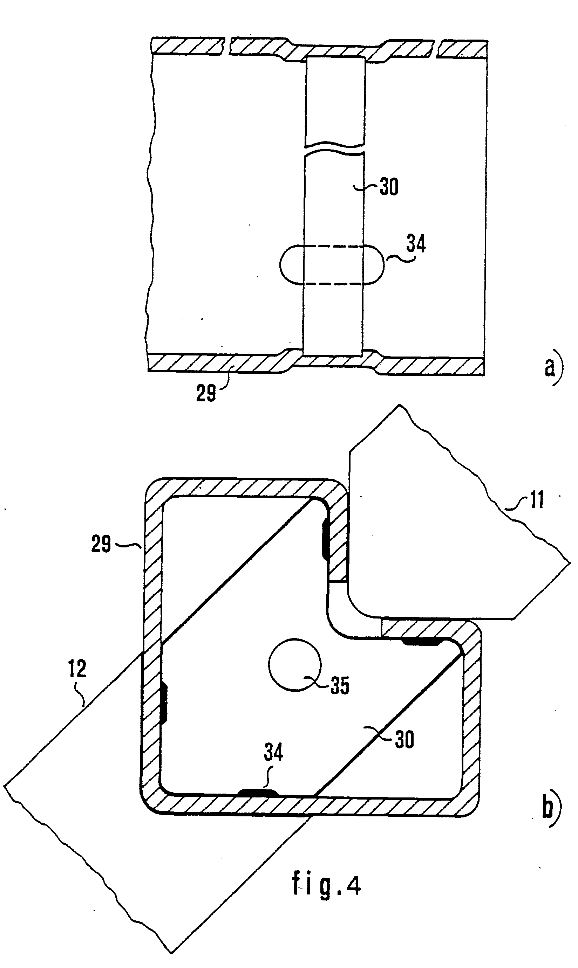

In figure 1 it is clearly shown that the machine is mainly constituted by a column 1 and a bench 2. Column 1 forms the welding machine and includes devices 3 for the accommodation and the locking of the bar and devices 4 for the accommodation and the support of the platelike body. The bench 2 encloses the devices necessary to allow the automatic insertion of the platelike body inside the bar in order to carry out the welding operations. In particular the bench provides the presence of a slide 5 along which a flat body 6 moves, suitable to support all the devices which allow the insertion mentioned above. An earth electrode 7 of the welding machine, a device 8 for the drawing out of the platelike body and a locking device 9 of the same body are located on the flat surface 6. The flat surface 6 is operated by a piston controlled by a pneumatic system 10. On enlarged scale, Fig. 2 shows the welding machine as well as the devices 3 and 4 of figure 1. Said welding machine contains the second electrode which is composed by a first and a second part (11 and 12 respectively). According to the invention the first part 11 is fixed, while second part 12 is so shaped as to be moved vertically along slide guides (not illustrated) provided on said column 1. The shape of the working surfaces of the first and second part is clearly stated hereafter with reference to figure 4.

Devices 3 suitable for the location and the locking of the bar are constituted by support devices 13, devices 14 which prevent from the vertical shifting and devices 15 which prevent from the horizontal shifting. Devices 14 are composed by a plate having the inferior part grooved complementary to a profile of the bar with which it will come into contact and having the upper part connected to a toggle mechanism 16. Said mechanism allows the shifting of the plate according to a defined circumference arc and is therefore adapted to engage the bar among said support devices 13 and said plate 14. Devices 15 are fit to prevent the bar from the horizontal shifting and are mainly constituted by a plurality of pins 17 which are operated by a device 18, pneumatic controlled. Under operating conditions the pins are placed inside holes, usually provided inside the bar, and prevent the bar from the horizontal shifting.

Devices 4 for the placing and support of the platelike body are constituted by an element 19, with U-shaped section, which has its sides crossed by small pistons, pneumatic controlled, a section of which comes out as to the inner sides.

The platelike body is therefore adapted to be placed between the sides of element 19 so as to link against the portion of said pistons 20 which comes out.

Figure 2 shows further the shape of said first electrode 7 of the welding machine which is constituted by more copper blocks anchored to a support 22 by means of a joint 21. The shape of the portion 7' of said electrode is similar to the profile of the platelike body. In particular the front side of said portion 7' is so shaped as to present the same form of the platelike body, in order to enlarge the contact surface by diminishing the electric resistance.

Still on Figure 1, it is possible to note that the device which draws out the platelike body 8 is placed on a further flat surface 23, which can freely slide along the rack, moved by another piston, operated by a pneumatic controlled system 24. On this flat surface 23 a motor 25 is placed, which causes the rotation of a pin 26 having a threaded end. Said pin is so shaped as to cross the front bar of said locking device 9 as well as to cross said first electrode 7, coming out from the front side of said portion 7'. The axis of pin 26 coincides with the axis of the hole provided on the platelike body, so that by operating the motor 25 and by causing the sliding of the flat surface 23, the pin 26 is screwed into the hole of the platelike body. When the screwing operations begins, the pistons 20 of the loading element 4 prevent the platelike body from the upsetting.

The pin 26 presents a part of an enlarged section 27 adapted to act against the front bar of said locking device 9 which is moved by another piston 28, pneumatic controlled. Once the drawing out device has completed the screwing process described above, the piston 28 carries back the locking device (9), whose front bar acts against said enlarged part 27 of pin 26, pulling it back.

Said shifting is completed when the platelike body is joined to the front side 7' of the first electrode 7. In order to reduce the electric resistance between the platelike body and the first electrode, the adherence acquires a sensible value (for example, some hundreds of Kg). The insertion of the platelike body into the bar is performed by said pneumatic system 10, which pushes forward the flat surface 6 and consequently all the devices placed on it, the unit composed of « first electrode-platelike body » included. The sliding forward of this latter is allowed by the pulling back of the pistons 20 of the loading unit 4, which do not come out from the inner sides of said body 19 and can therefore allow the sliding forward of said combined unit. The insertion of the platelike body into the bar is made easier by the way of joint 21 provided on the first electrode 7 which, by causing a light oscillation, can facilitate the entering of the platelike body.

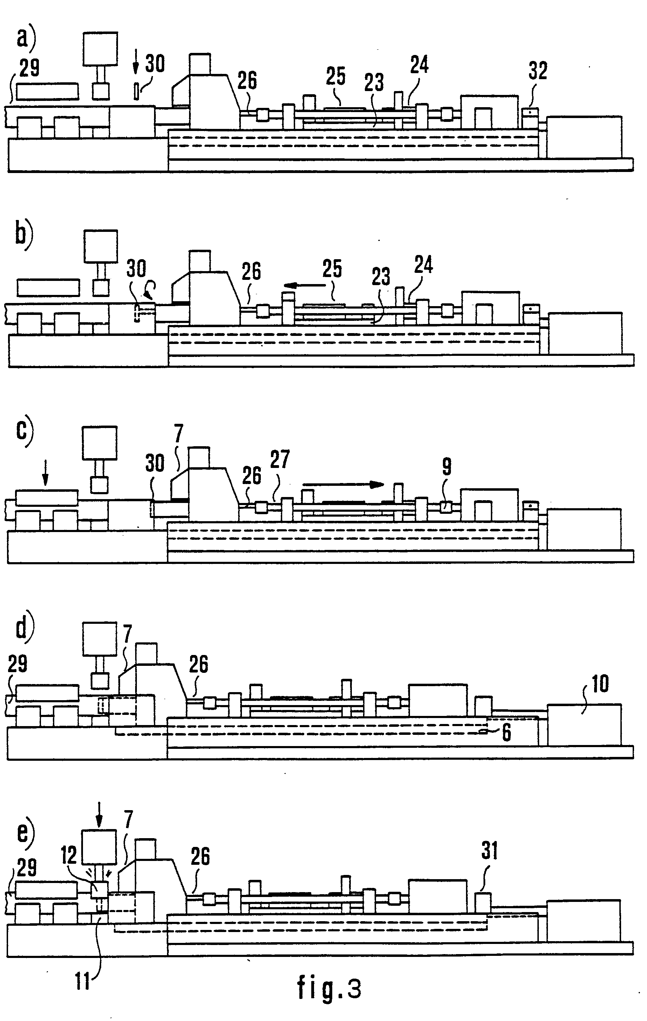

Following the single phases of the process according to the invention and with the help of fig. 3 the working of the devices mentioned above will be better evidenced.

The first phase is shown in fig. 3a and requires the placing of tubular bar 29 and platelike body 30 on the relative support. In particular the bar 29 is pushed forward till it comes into contact with an element of the welding machine.

The second phase is illustrated in fig. 3b and 3c. In particular said phase provides the switching on of motor 25, causing the rotation of pin 26 and the sliding forward of said flat surface 23 by means of the device 24. The rotation and sliding forward of the threaded pin 26 causes its screwing into the hole of the platelike body of a predetermined value. Once the screwing operation is completed, the motor 25 switches off and the sliding forward of the flat surface 23 as well as the sliding back of said locking device 9 stop, as shown in fig. 3c. The device 9 acts against the enlarged portion 27 of pin 26 by causing its sliding back as well as the pulling back of the platelike body 30 till the same joins to this front side 7' of the first electrode 7 using a predetermined force.

The third phase is illustrated with the help of fig. 3d and provides the sliding forward of said flat surface 6, controlled by the device 10, and of the unit composed by the electrode 7 — platelike body 30 until this latter is inserted into the bar 29.

The fourth phase is shown in fig. 3e and provides the performance of the welding operations which are realised when the portion 12 of the second electrode comes into contact with the bar 29. From that time forth a voltage between the first and second electrode (7, 11 and 12) is applied and the platelike body is welded to the bar by means of Joule effect, as better evidenced in fig. 4.

The process, according to the invention, requires the performance of the four phases described above and if necessary the performance of other two phases to make easier the welding operations and to check the efficiency of the welding operation. Once the process described above is completed and before the machine sets the reset operation off, a control is carried out on the welding operation. Said check provides the applying of a predetermined force to said platelike body 30, through the pin 26, the device 9 and the flat surface 6. Should the welding operation be not well executed, the force so applied will cause the disengagement and the carrying back of the platelike body. The devices which determine the carrying effect that the platelike body 30 has substained, are placed on the bench 2 and if the carrying effect exceeds a predetermined value, an alarm is released. The means cited above (see fig. 1) are constituted by a photoemitting element 31 which emits a light ray usually interrupted by a screen 32 provided with a hole. If the sliding exceeds a predetermined value, the hole's axis coincides with the axis of the light ray which causes the release of an alarm as it reaches a photoreceiving unit 33.

According to another embodiment the means for the determination of the carrying effect can be substituted by other means (not illustrated) fit to identify a pressure fall in the pneumatic system when the platelike body is disengaged. Said means release an alarm when a pressure fall is determined.

The return to the operated position provides the rotation of motor 25 in the opposite direction as to the screwing direction and the reset of said flat surfaces 6 and 23 to the original state.

The welding operations are facilitated through the realisation of indentations 34 in the tubular bar's sides, as shown in fig. 4a and 4b, where a bar's portion is longitudinally and transversally intersected. In the same figure the first and second part 11 and 12 of the second electrode are schematically illustrated in order to better evidence the shape and arrangement of the relative working surfaces. From the fig. 4a it is evident that the indentations 34 are elliptical-shaped having an axis dimension greater than the thickness of the platelike body 30.

The indentations 34 provide the concentration of the current flowing in the surfaces to which they are interested and therefore cause a partial fusion of the surface which is in contact with the sides of the platelike body 30. Said partial fusion develops into a penetration of the platelike body in the indentations by causing a sensible increase of the contact resistance between the bar 29 and the platelike body 30.

The process and the machine according to the invention allow the contemporaneous welding of four sides of the platelike body to the inner sides of the tubular bar, spending a time which is compatible with the working speed of the automatic production line and obtaining a contact particularly valid, due to the shape of said indentations 34. The indentations 34 are realised just when the iron sheet is cut to obtain the tubular bar.

A hint to a pneumatically operated machine has been made in the description above ; without digressing from the invention said system can be replaced by an oleodynamic or other type system.

## Claims

1. Process for the automatic welding of a platelike body (30) transversely across the inside of a tubular metal bar (29) having a polygonal-shaped section, comprising the following steps :

the bar (29) and the platelike body (30) are placed in respective supports (3 respectively 4) ;

the platelike body (30) is withdrawn from the support (4) and electrically connected to a first electrode (7) of a welding machine ;

the unit composed of the « first electrode-platelike body (7-30) » is inserted within the bar (29) such that the position of the platelike body corresponds to the transverse centre plane of a first and of a second part (11 and 12) of the second electrode of the welding machine ;

said first and/or second part (11 and 12) of the second electrode is displaced along said centre plane so as to clamp the bar between the first and second parts and, as soon as the bar is clamped, an electric power between the first and the second electrode (7 and 11, 12) is applied to effect electrical resistance welding of the platelike body to the tubular bar.

2. Process as claimed under claim 1 characterized in that at the end of the welding process a check phase is actuated, which provides the applying of a predetermined force to said platelike body (30) and the check of the efficiency of the welding once the sliding caused by the said force is terminated.

3. Process as claimed under claim 1 characterized in that before starting the welding process on the bar's portion interested, a plurality of long-shaped indentations (34) are realised and the dimensions of their main axis should be greater than the thickness of the platelike body (30).

4. Process as claimed under claim 2 characterized in that said check phase consists of applying a predetermined force to said platelike body (30) and in checking the efficiency of the welding operation considering the pressure fall in a pneumatic system for applying the force which follows the application of said force.

5. Machine for the implementation of the process as claimed under the above claims, characterized in that it comprises the following technical features :

a resistance welding machine comprising a first electrode (7), adapted to perform the longitudinal insertion and a second electrode composed of a first and a second part (11 and 12), at least one of which being mounted to slide perpendicularly towards the first electrode (7), the second electrode having working surfaces shaped as to realise a profile complementary to the respective bar's sides with which they should come into contact ;

a first device (3) suitable to accommodate and to lock the bar (29) in such a way as to have the centre line of the bar coinciding with the sliding direction of the first electrode (7) ;

a second device (4) suitable to accommodate and to support the platelike body (30) perpendicularly to the sliding direction of the first electrode (7) ;

a third device (8), suitable to perform a screwing cycle of a threaded pin (26) into a hole provided in the platelike body (30) ;

a locking device (9) suitable to cause the adherence of the platelike body (30) to a surface of the first electrode (7) by applying a predetermined force on the threaded pin ;

an insertion device (6) suitable to cause sliding of the third device (8) together with the locking device (9) until the platelike body (30) is fully inserted into the bar (29) so that electrical resistance welding of the platelike body (30) to the tubular bar (29) can be effected.

6. Machine as claimed under claim 5 characterized in that the first device (3) which provides the accommodation and locking of the bar (29) comprises the following features :

support devices (13) having working surfaces arranged at angle complementary to the bar's sides (29) with which they should come into contact ;

a fourth devices suitable to prevent vertical sliding of the bar (29) and being composed of a plate (14), the bottom side of which having a profile grooved complementary to the bar's portion with which it should come into contact and the upper side being connected to a toggle mechanism (16) ;

the fifth devices (15) suitable to prevent horizontal sliding of the bar composed at least of a pneumatically operated pin (17), adapted to be placed inside a hole provided in the bar (29).

7. Machine as claimed under claim 5, characterized in that said second device (4) is composed of an U-shaped element (19) having in its sides pneumatically controlled pistons (20) which come out from the inner sides of the U-shaped element (19) and can be drawn back into the sides.

8. Machine as claimed under claim 5 characterized in that said third device (8) is composed of a pin (26) having a threaded end connected to a motor (25) mounted on a flat surface (23) which can freely slide in respect to another flat surface (6) operated by a pneumatic system (24).

9. Machine as claimed under claims 5 and 8 characterized in that said locking device (9) is composed of a pneumatically operated unit, having a front bar shaped so as to act against an enlarged portion (27) of said pin (26), causing sliding of the pin and of the platelike body (30) with restect to the first electrode and, when the platelike body contacts the first electrode, applying a predetermined force which determines the adherence of the platelike body (30) to the first electrode (7).

10. Machine as claimed under claim 5 characterized in that said insertion device (6) is constituted by a flat surface suitable to support said third device (8), the locking device (9) and the first electrode (7) and the horizontal sliding being effected by a pneumatically operated system (10).

11. Machine as claimed under claim 5 for carrying out the process of claim 2 characterized in that it comprises means for checking the efficiency of the welding operation which comprises a photoemitter unit (31), a photoreceiver unit (33) and a screen (32) provided with a hole, the units and screen being arranged such that when, at the end of the sliding of the platelike body (30), the axis of the light ray emitted by the photoemitter unit (31) coincides with the hole's axis reaching the photoreceiver unit (33), an alarm is released.

## Patentansprüche

1. Verfahren für automatische Schweissung von einem plattenförmigen Körper (30) innerhalb eines Metallrohrbarrens (29) mit polygonalem Schnitt, das folgende Schritte vorsieht :

Der Barren (29) und der plattenförmige Körper (30) werden in den entsprechenden Halter (3 bzw. 4) gelegt ;

der plattenförmige Körper (30) wird vom Halter (4) herausgenommen und mit der ersten Elektrode (7) der Schweissmaschine angeschlossen ;

die Einheit « erste Elektrode-plattenförmiger Körper » (7-30) wird in den Barren (29) so eingeführt, dass die Lage des plattenförmigen Körpers der Bindelinie eines ersten und eines zweiten Teiles (11 und 12) der zweiten Elektrode der Schweissmaschine entspricht ;

der oben genannte erste und/oder zweite Teil (11 und 12) der zweiten Elektrode werden/wird die genannte Bindelinie entlang gestellt, sodass der Barren zwischen dem ersten und dem zweiten Teil festgeklemmt wird ; sobald der Barren befestigt ist, wird eine elektrische Leistung zwischen der ersten und der zweiten Elektrode (7 und 11, 12) aufgebracht, um die elektrische Widerstandsschweissung zwischen dem plattenförmigen Körper und dem Rohrbarren zu realisieren.

2. Verfahren, wie unter dem Anspruch 1, von der Tatsache gekennzeichnet, dass am Ende des Schweissverfahrens eine Pruefphase stattfindet, die eine vorbestimmte Kraft dem oben erwähnten plattenförmigen Körper (30) aufbringt und die Wirkung der Schweissung prueft, sobald die Verschiebung wegen der erwaehnten Kraft abgeschlossen ist.

3. Verfahren, wie unter dem Anspruch 1, von der Tatsache gekennzeichnet, dass vor dem Starten des Schweissungsverfahrens am betreffenden Barrenteil eine Mehrzahl von länglichen Einschnitten (34) realisiert wird, wo die Abmessungen der Hauptachsen grösser sein müssen, als die Dicke des plattenförmigen Körpers (30).

4. Verfahren, wie unter dem Anspruch 2, von der Tatsache gekennzeichnet, dass die oben genannte Prüfphase in dem Aufbringen einer vorbestimmten Kraft an den obigen plattenförmigen Körper (30) sowie in der Prüfung des Wirkungsgrades des Schweissverfahrens besteht, unter Berücksichtigung des Druckabfalles in dem pneumatischen System zum Aufbringen der Kraft, der sich nach der Aufbringung der genannten Kraft ereignet.

5. Gerät zur Durchführung des Verfahrens entsprechend den oben genannten Ansprüchen, von der Tatsache gekennzeichnet, dass dieses Gerät die folgenden technischen Eigenschaften aufweist :

Eine Widerstandsschweissmaschine, die folgendes besitzt: eine erste Elektrode (7) zur Durchführung der waagerechten Verschiebung, sowie eine zweite Elektrode, die aus einem ersten und einem zweiten Teil (11 und 12) besteht, von denen mindestens eine so aufgestellt ist, um zu der ersten Elektrode senkrechte Verschiebungen vorzunehmen; die zweite Elektrode hat solche Arbeitsoberflächen, die ein komplementäres Profil zu den entsprechenden Barrenseiten bilden, mit denen die Flaechen in Berührung treten;

eine erste Vorrichtung (3) zur Positionierung und Befestigung des Barrens (29), damit die Mittellinie des Barrens mit der Verschiebungsrichtung der ersten Elektrode (7) übereinstimmt;

eine zweite Vorrichtung (4) zur Positionierung und Halterung des plattenförmigen Körpers (30), senkrecht zu der Verschieberichtung der ersten Elektrode (7);

eine dritte Vorrichtung (8) zur Durchführung des Verschraubungsspieles eines Gewindezapfens (26) in ein in dem plattenförmigen Körper (30) vorgesehenes Loch;

eine Befestigungsvorrichtung (9) zur Gewährleistung des Anhaftens des plattenförmigen Körpers (30) an eine Oberfläche der ersten Elektrode (7) durch das Aufbringen einer vorbestimmten Kraft an den Gewindezapfen;

eine Einführungsvorrichtung (6) zum Hervorrufen einer gleichzeitigen Verschiebung der dritten Vorrichtung (8) und der Befestigungsvorrichtung, bis der plattenförmige Körper (30) in den Barren (29) vollkommen eingeführt ist, sodass die elektrische Widerstandsschweissung zwischen dem plattenförmigen Körper (30) und dem Rohrbarren (29) vorgenommen werden kann.

6. Gerät wie unter dem Anspruch 5, von der Tatsache gekennzeichnet, dass die erste Vorrichtung (3) zur Positionierung und Befestigung des Barrens die folgenden Eigenschaften aufweist:

Haltevorrichtungen (13), in denen die Arbeitsflächen einen komplementären Winkel zu den Barrenseiten (29) besitzen, mit denen sie in Berührung kommen werden

eine vierte Gruppe Vorrichtungen zur Vermeidung von Vertikalverschiebungen des Barrens (29), die aus einer Platte bestehen (14), derer untere Seite ein zum Barrenteil komplementäres Keilprofil aufweist, mit dem sie in Berührung kommen wird, und derer obere Seite mit einem Kniewerk verbunden ist (16)

eine fünfte Gruppe Vorrichtungen (15) zur Vermeidung von Horizontalverschiebungen des Barrens, die mindestens von einem pneumatisch betätigten Zapfens (17) gebildet ist, der in ein im Barren vorgesehenes Loch (29) gelegt wird.

7. Gerät, wie unter dem Anspruch 5, von der Tatsache gekennzeichnet, dass die oben genannte zweite Vorrichtung (4) aus einem U-förmigen Element (19) gebildet ist, in dessen Seiten pneumatisch gesteuerte Kolben vorhanden sind, die aus den Innenseiten des U-förmigen Elementes (19) herauskommen und in die Innenseiten zurückgehen können.

8. Gerät, wie unter dem Anspruch 5, von der Tatsache gekennzeichnet, dass die dritte Vorrichtung (8) aus einem Zapfen besteht (26), in dem ein Gewindeende mit dem auf einer ebenen Fläche (23) Installierten Motor (25) verbunden ist, der sich frei verschieben kann, im Verhaeltnis zu der anderen ebenen Oberflächen (6), die von einem pneumatischen System (24) gesteuert wird.

9. Gerät, wie unter den Ansprüchen 5 und 8, von der Tatsache gekennzeichnet, dass die oben genannte Befestigungsvorrichtung (9) aus einer pneumatisch gesteuerten Einheit besteht, derer vorderseitiger Barren so gebildet ist, dass er gegen einen breiteren Teil (27) des gesagten Zapfens (26) geht, wobei die Verschiebung des Zapfens und des plattenförmigen Körpers (30) unter Berücksichtigung der ersten Elektrode verursacht wird und bei der Berührung des plattenförmigen Körpers mit der ersten Elektrode eine vorbestimmte Kraft aufgebracht wird, die das Anhaften des plattenförmigen Körpers (30) zu der ersten Elektrode (7) verursacht.

10. Gerät, wie unter dem Anspruch 5, von der Tatsache gekennzeichnet, dass die oben genannte Einführungsvorrichtung (6) aus einer ebenen Oberfläche zum Halten der oben genannten dritten Vorrichtung (8), der Befestigungsvorrichtung (9) und der ersten Elektrode (7) besteht, und dass die waagerechte Verschiebung von einem pneumatischen System vorgenommen wird (10).

11. Gerät, wie unter dem Anspruch 5, zur Durchführung des Verfahrens des Anspruches 2, von der Tatsache gekennzeichnet, dass es Mittel zur Pruefung des Wirkungsgrades des Schweissverfahrens umfasst, und zwar: eine photoemittierende Einheit (31), eine photoempfangende Einheit (33) und einen Schirm (32), der ein Loch aufweist; diese Einheiten und der Schirm (32) sind so aufgebaut, dass eine Alarmmeldung stattfindet, wenn am Ende der Verschiebung des plattenförmigen Körpers (30) die Achse des Lichtradius aus der photoemittierenden Einheit (31) mit der die photoempfangende Einheit (33) erreichenden Lochachse zusammenfällt.

**Revendications**

1. Procédé pour le soudage automatique d'un corps plaquiforme (30) à l'intérieur d'une barre métallique tubulaire (29) à section polygonale, caractérisé par les opérations mentionnées ci-après:

la barre (29) et le corps plaquiforme (30) sont placés sur leur support (3 et 4 respectivement);

le corps plaquiforme (30) est retiré de son support (4) et connecté par voie électrique à la première électrode (7) de la machine à souder;

l'ensemble se composant de la « première électrode-corps plaquiforme » (7-30) est introduit à l'intérieur de la barre (29), de façon que la position du corps plaquiforme corresponde à la ligne médiane d'une première et d'une seconde partie (11 et 12) de la deuxième électrode de la machine à souder;

ladite première et/ou seconde partie (11 et 12) de la deuxième électrode est déplacée le long de la susdite ligne médiane, de façon à serrer la barre entre la première et la seconde partie ; dès que la barre est serrée, la puissance électrique est appliquée entre la première et la deuxième électrode (7 et 11, 12) pour effectuer la soudure par résistance électrique du corps plaquiforme à la barre tubulaire.

2. Procédé comme il est indiqué à la revendication 1, caractérisé par l'exécution, à la fin du procédé de soudage, d'une phase de contrôle prévoyant l'application d'une force prédéterminée au corps plaquiforme (30) et l'évaluation de l'efficacité de la soudure, à la fin du déplacement produit par cette force.

3. Procédé comme il est indiqué à la revendication 1, caractérisé par le fait qu'avant de commencer le procédé de soudage sur la portion de barre intéressée, on effectue une série d'emboutissages de forme longue (34) et les dimensions de leur axe principal devraient être supérieures à l'épaisseur du corps plaquiforme (30).

4. Procédé comme il est indiqué à la revendication 2, caractérisé par le fait que la phase de contrôle susdite consiste dans l'application d'une force prédéterminée audit corps plaquiforme (30) et dans l'évaluation de l'efficacité de la soudure, en prenant en considération la chute de pression qui a lieu dans le système pneumatique à la suite de l'application de cette force.

5. Machine pour outiller le procédé décrit aux revendications ci-dessus, caractérisée par les particularités techniques suivantes :

une machine à souder à résistance, comprenant une première électrode (7) capable de se déplacer en sens horizontal, et une deuxième électrode se composant d'une première et d'une seconde partie (11 et 12), dont au moins une est capable de se déplacer perpendiculairement à la première électrode (7) ; la deuxième électrode présente des surfaces de travail façonnées de manière à réaliser un profil complémentaire aux correspondants côtés de la barre avec lesquels les surfaces entreront en contact ;

un premier dispositif (3), capable de recevoir et serrer la barre (29), de façon que la ligne médiane de la même coïncide avec le sens de déplacement de la première électrode (7) ;

un second dispositif (4), capable de recevoir et soutenir le corps plaquiforme (30) en position perpendiculaire par rapport au sens de déplacement de la première électrode (7) ;

un troisième dispositif (8), capable d'effectuer un cycle de vissage d'un tourillon fileté (20) dans le trou prévu dans le corps plaquiforme (30) ;

un dispositif de serrage (9), capable de faire adhérer le corps plaquiforme (30) à une des surfaces de la première électrode (7) moyennant l'application d'une force prédéterminée au tourillon fileté ;

un dispositif d'introduction (6), capable de produire le déplacement simultané du troisième dispositif (8) et du dispositif de serrage (9) jusqu'à l'introduction complète du corps plaquiforme (30) dans la barre (29), pour pouvoir effectuer le soudage par résistance électrique du corps plaquiforme (30) à la barre tubulaire (29).

6. Machine comme il est décrit à la revendication 5, caractérisée par le fait que le premier dispositif (3) recevant et serrant la barre (29), possède les particularités suivantes :

dispositifs de support (13), dont les surfaces de travail forment un angle complémentaire avec les côtés de la barre (29), avec lesquels elles entreront en contact ;

quatrièmes dispositifs, capables d'empêcher le déplacement de la barre (29) en sens vertical, se composant d'une plaque (14) dont le côté inférieur présente un profil rainuré complémentaire à la portion de barre avec laquelle il entrera en contact, et dont le côté supérieur est connecté à un mécanisme articulé ;

cinquièmes dispositifs (15), capables d'empêcher le déplacement de la barre en sens horizontal, se composant d'au moins un tourillon (17) à fonctionnement pneumatique, apte à se placer à l'intérieur du trou prévu dans la barre (29).

7. Machine comme il est décrit à la revendication 5, caractérisée par le fait que le second dispositif (4) se compose d'un élément en U (19), dont les côtés sont munis de pistons à fonctionnement pneumatique (20) sortant des côtés intérieurs de l'élément en U (19) et pouvant y entrer.

8. Machine comme il est décrit à la revendication 5, caractérisée par le fait que le troisième dispositif (8) susdit se compose d'un tourillon (26) muni d'une extrémité filetée connectée à un moteur (25) monté sur une surface plate (23), laquelle peut glisser librement par rapport à une autre surface plate (6) fonctionnant moyennant un système pneumatique (24).

9. Machine comme il est décrit aux revendications 5 et 8, caractérisée par le fait que le dispositif de serrage (9) se compose d'un groupe à fonctionnement pneumatique dont la barre frontale est façonnée de manière à agir sur une portion étendue (27) dudit tourillon (26), ce qui donne lieu au déplacement du tourillon et du corps plaquiforme (30) par rapport à la première électrode et, lorsque le corps plaquiforme entre en contact avec la première électrode, à l'application d'une force prédéterminée qui fait adhérer le corps plaquiforme (30) à la première électrode (7).

10. Machine comme il est décrit à la revendication 5, caractérisée par le fait que le dispositif d'introduction (6) se compose d'une surface plate capable de soutenir ledit troisième dispositif (8), le dispositif de serrage (9) et la première électrode (7), et dont le déplacement en sens horizontal est effectué par le système à fonctionnement pneumatique (10).

11. Machine comme il est décrit à la revendication 5, pour la réalisation du procédé mentionné à la revendication 2, caractérisé par le fait que la même comprend des moyens aptes à évaluer l'efficacité de l'opération de soudage, se composant d'un élément photoémetteur (31), un élément photorécepteur (32) et un écran muni d'un trou ; les éléments et l'écran sont disposés de façon à produire un signal d'alarme lorsqu'à la fin de la course de déplacement du corps plaquiforme (30), l'axe du rayon lumineux émis par l'élément photoémetteur (31) coïncide avec l'axe du trou atteignant l'élément photorécepteur (33).

fig.1

fig.2

fig.3

30

34

29

a)

11

29

12

35

34

30

b)

fig.4

4